# EUROPEAN PATENT APPLICATION

(11) **EP 2 730 460 A1**
(43) Date of publication of application: **14.05.2014**
(21) Application number: 13185509.0
(22) Date of filing: 23.09.2013
(51) Int. Cl.: B60P 3/22, B65F 3/02, E03F 7/10, B60P 1/60

(54) **Transportable waste processing tank**

(30) Priority: 13.11.2012 AU 2012247086; 13.11.2012 NZ 60358912
(71) Applicant: Vac-U-Digga R&D Pty Ltd, 4207 Beenleigh Queensland (AU)
(72) Inventor: Beach, Jack, Beenleigh, Queensland 4207 (AU); Costello, Neil, Beenleigh, Queensland 4207 (AU)
(74) Representative: Carmody, Mark

(57) **Abstract**

A transportable and interchangeable tank (10) for collecting and disposing of mud, slurry or other fluid waste material adapted to be transported on a transport vehicle (12) having an air evacuation (22) connection specially adapted to connect directly to and seal with a complementarily connection of a vacuum pump (26) on the vehicle, whereby the connective dead space between the tank and the pump is substantially minimised in order to improve the efficiency of evacuating air from and thus filling the tank.

## Description

### FIELD OF THE INVENTION:

This invention relates to waste handling equipment, in particular but not exclusively to a transportable and interchangeable waste processing tank for transporting mud, slurry or other fluid waste typically but not exclusively produced by a water lance excavation vehicle.

### BACKGROUND OF THE INVENTION:

Hydro Vacuum Excavation is a process whereby high pressure water is used to break up the ground with the resultant slurry formed being sucked up by a vacuum air conveyor into a sealed storage vessel. The vessel is commonly placed under vacuum to create flow up a hose. Vacuum excavators are generally either trailer or truck mounted.

The slurry formed by the process is classified as a contaminated waste when it has to be disposed of.

The slurry is generally extremely sloppy and requires complete containment in a sealed vessel for transportation.

There are a diminishing number of landfill facilities which will accept the slurry. Due to urban sprawl, dump sites that do accept the slurry are being located further and further out of town. Generally, disposal sites are specialist sites that charge high premiums to accept the slurry. If the slurry is allowed to dry, the material is very well graded, compacts well and can in fact be sold as fill.

The travel factor is a major issue tied to the disposal process. Depending on the vacuum excavator's efficiency, capacity and distance to a disposal point, far more time can be spent travelling between the site and the disposal point than actually productively digging on the site.

Furthermore, downtime incurred by other equipment and labour at the site is often a larger cost than the vacuum excavation process itself.

A frequent push is for increasingly larger vacuum excavation vehicles to be used, but there is an immediate trade off between size and accessibility / manoeuvrability of such vehicles. Larger vehicles are also significantly more expensive and create hazards, obstructions and disruptions to traffic due to their generally large footprint on the road.

Prior art solutions include the following:
As mentioned above, there is a push to larger trucks resulting in more cost, congestion, fuel and access constraints. To give an example, the 'Holy Grail' of vacuum excavation is a digging water recycler. Examples exist but are not commercialised as they have too many moving parts, are unreliable, big, heavy, complex and extremely expensive to purchase. The volume of earth that can be excavated without returning to dump mud, slurry or other waste products is often only twice that of a conventional vacuum excavator making this a less than cost effective solution.

The use of compressed air in lieu of water as the medium to break up ground for the excavation process has proven to work in only soft cohesion less soils. In most cases this is only suitable under limited circumstances. Such systems are also plagued with safety issues such as dust and flying debris containment.

Other solutions include having a "mothership" which is a larger tanker unit that travels around or is parked to collect the spoil / slurry out of a smaller working unit.

Roll on, roll off or skip type bins are also deployed in vacant lots near work areas for vacuum excavators to drop their loads into to save travel time.

Solid waste landfills may accept the material but vacuum excavation spoil is usually just dropped straight on to the ground and is not collected, contained or recycled.

Some operators illegally dump waste thereby facing considerable fines if caught.

Prior art disadvantages may be discerned as follows.

In relation to fixed dump sites, which are typically landfill sites that generally occupy large land areas located on city outskirts the following considerations apply. Here, spoil is dumped on ground with little or no containment with the consequence that high dump costs (charges) are levied as the spoil is deemed to be contaminated. The prior art landfill process has little to no reuse or recycling of water or soil and designated sites are restricted to limited hours of operation.

In the case of 'On Truck Recyclers', due to the variation of soil types from cohesive clays to cohesion less gravels, the time and process required to remove water is extremely variable. Accordingly more than one process may be required for rapid dewatering to achieve viable cycle time requirements. Such recyclers often contain many moving parts operating in an aggressive / abrasive environment, are complex, costly with consequential reliability issues. Further, such recyclers offer little increase in volume handled as equipment weight restricts volume. The resultant spoil is still too wet to reuse immediately as backfill.

In relation to 'Mothership' systems, these are often large expensive resources not fully utilised with considerable travel time expended from unit to unit. These systems are generally underutilised for the horsepower potential they have. Issues of containment and spillage remain an environmental protection agency (EPA) issue, and the associated travel costs often make such solutions unviable. In most cases, due to the nature of the spoil, very little material is recovered by the mother ship.

The use of roll on, roll off or skip type bins also have significant spillage and containment risk as well as being difficult to access to dump the spoil. Also as the bins are generally left unattended significant safety risks are associated with this system.

### OBJECT OF THE INVENTION:

It is the object of the invention to ameliorate some or all of the above disadvantages of the prior art by providing a novel and innovative transportable waste processing tank adapted to transport mud, slurry or other fluid waste material typically but not exclusively produced by a water lance excavation vehicle.

### STATEMENT OF INVENTION:

In a broad aspect, the invention resides in a transportable tank for collecting and disposing of fluid waste material able to be moved between a tank filling position and a tank emptying position on a transport vehicle;
the tank having an air evacuation connection specially adapted to connect directly and hermetically seal with a connection of a vacuum pump located on the transport vehicle when the tank is in the tank filling position, such that connective dead space between the tank and the pump is substantially minimised to improve the efficiency of evacuating air from and thus filling the tank.

In a more specific aspect the invention resides in a_transportable and interchangeable tank for collecting and disposing of mud, slurry or other fluid waste material produced by a water lance excavation vehicle, including in combination,
an enclosed hollow vessel for collecting the waste material,
the vessel adapted to be loaded on, unloaded from and transported on a transport vehicle;
the vessel including a waste inlet ,a waste outlet and an air evacuation connection;
the vessel able to be moved between a tank filling position and a tank emptying position on the transport vehicle;
the air evacuation connection specially adapted to connect directly to and hermetically seal with a complementarily configured connection of a vacuum pump on the transport vehicle in the tank filling position, such that connective dead space between the tank and the pump is substantially minimised in order to improve the efficiency of evacuating air from and thus filling the tank.

In operation, as air is evacuated from the tank by the vacuum pump, waste material is caused to flow into the tank via the waste inlet, and wherein when full, the tank is unloaded from the vehicle and replaced with an empty tank such that a substantially continuous collection of waste material is enabled by the use of a plurality of empty interchangeable replacement tanks.

Preferably the tanks are transported on specially adapted transport vehicles typically trucks or lorries with tank loading and unloading means and tank positioning means. Preferably, the tank loading and unloading means comprises a hydraulically or pneumatically operated lifting crane mounted on the transport vehicle.

Preferably, the tank positioning means comprises a hydraulically operated telescopic ram specially adapted to tilt the tank when it is directly supported by the chassis of the vehicle.

In a preferred example, the tank loading and unloading means and tank positioning means may be the same apparatus or device.

In the alternative, the tank may be separately located on a tipping tray or bed of the transport vehicle.

Preferably, the tank loading and unloading means, tank positioning means and vacuum pump are fixtures of the transport vehicle whereby the air evacuation and vacuum pump connectors are caused to be joined when the tank is loaded on and moved into the tank filling position on the transport vehicle.

Preferably the waste material collected is disposed of by transporting the filled tank to an approved waste disposal site wherein the tank is moved into the tank emptying position and waste is pumped out through the waste outlet or a fully opening rear door.

In another aspect, the invention resides in a method of collecting and disposing of fluid waste material using the tank as hereinabove described including the steps of:
(a) evacuating air from the tank on a transport vehicle by the vacuum pump, wherein waste material is caused to flow into the tank via the waste inlet,
(b) unloading the tank from the vehicle when full and replacing the tank with an empty tank;
(c) repeating steps (a) and (b) such that a substantially continuous collection of waste material is enabled by utilising a plurality of interchangeable replacement tanks;
(d) transporting the filled tanks to a waste disposal site and emptying the tanks of their contents;
(e) using the emptied tanks as interchangeable replacement tanks for step (c).

### BRIEF DESCRIPTION DRAWINGS:

In order that the invention may be better understood and put into practical effect, reference will now be made to the accompanying drawings wherein,
Figure 1A to Figure 1D show a preferred tilting tank according to invention.
Figures 2A to 2D show a preferred sliding tank according to invention.
Figure 3 shows a tank tilted to the tank emptying position.

### DETAILED DESCRIPTION OF THE INVENTION

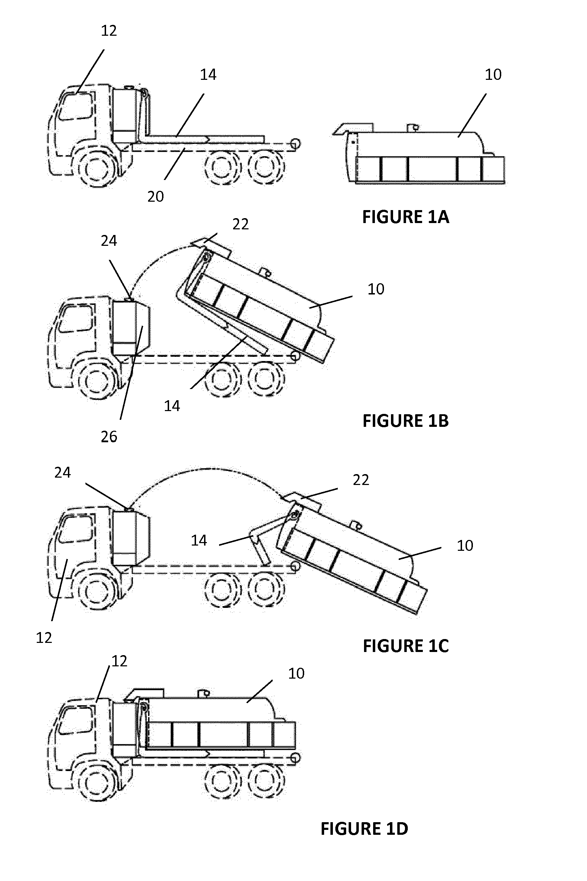

Referring now to Figures 1A to 1D there is shown elevational views of a tiltable transportable waste processing tank 10 according to the invention. Figure 1A shows the tank 10 lying on the ground behind the transport vehicle 12 preferably a double bogey chassis truck or lorry. Located on the transport vehicle is the tank loading and unloading means in the form of a telescopic armed crane 14 specially adapted to hook onto the tank 10 and lift and position the tank into the tank filling position on the vehicle 12. Preferably, there is a roller 16 at the end of the chassis 20 of the vehicle to facilitate loading the tank onto the vehicle.

Figure 1B and Figure 1C show progressive stages of loading the tank 10 on the vehicle 12. The air evacuation connection 22 located on the top of the tank is configured to connect directly to and hermetically seal with a complementarily configured connection 24 of a vacuum pump 26 on the transport vehicle in the tank filling position, such that connective dead space between the tank and the pump is substantially minimised in order to improve the efficiency of evacuating air from and thus filling the tank.

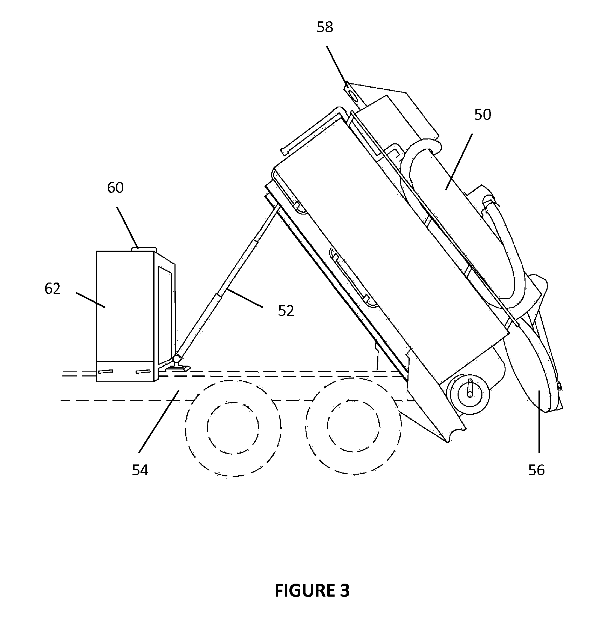

Figure 1D shows the the tank 10 in the fully loaded position on the truck 12 wherein the waste material collected is disposed of by transporting the filled tank to an approved waste disposal site where the tank is positioned into the tank emptying position and waste is pumped out through the waste outlet or a fully opening rear door (as shown in Figure 3).

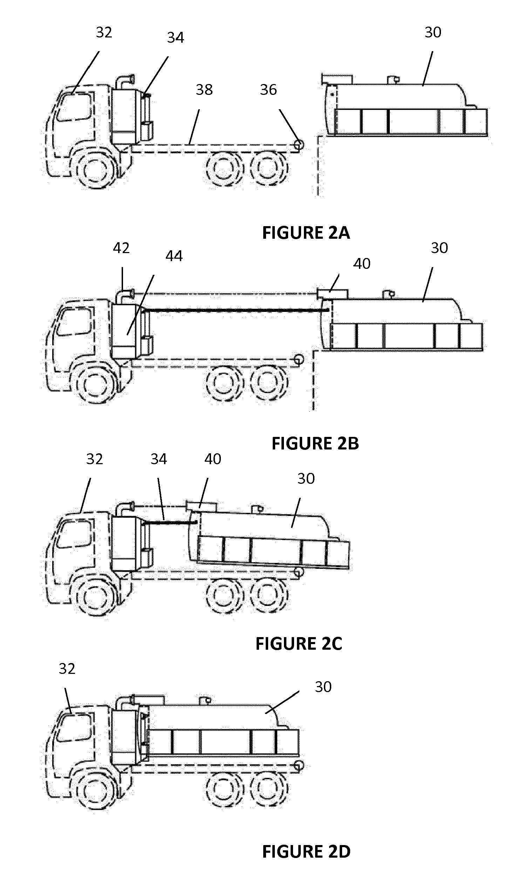

Referring now to Figures 2A to 2D there is shown elevational views of a slidable transportable waste processing tank 30 according to the invention. Figure 2A shows the tank 30 at chassis level behind the transport vehicle 32 preferably a double bogey chassis truck or lorry. Located on the transport vehicle is the tank loading and unloading means in the form of a winch mechanism 34 specially adapted to hook onto the tank 30 and pull the tank into the tank filling position on the vehicle. Preferably, there is a roller 36 at the end of the chassis 38 of the vehicle to facilitate loading the tank onto the vehicle.

Figure 2B and Figure 2C show progressive stages of loading the tank 30 on the vehicle 32. The air evacuation connection 40 located on the top of the tank is configured to connect directly to and hermetically seal with a complementarily configured connection 42 of a vacuum pump 44 on the transport vehicle in the tank filling position, such that connective dead space between the tank and the pump is substantially minimised in order to improve the efficiency of evacuating air from and thus filling the tank.

Figure 2D shows the the tank 30 in the fully loaded position on the truck 32 wherein the waste material collected is disposed of by transporting the filled tank to an approved waste disposal site wherein the tank is moved into the tank emptying position and waste is pumped out through the waste outlet or a fully opening rear door (as shown in Figure 3).

Figure 3 shows a preferred transportable and interchangeable tank 50 tilted by a ram 52 in the tank emptying position. In this example, the tank 50 is for collecting and disposing of mud, slurry or other fluid waste material produced by a water lance excavation vehicle adapted to be loaded on, unloaded from and transported on a transport vehicle 54 (shown in broken lines).The tank includes a waste inlet (not shown in this view), a waste outlet (not shown in this view) and a fully opening rear lid or door 56 and an air evacuation connection 58 specially adapted to connect directly to and hermetically seal with a complementarily configured connection 60 of a vacuum pump 62 on the transport vehicle 54 in the tilted tank filling position, such that connective dead space between the tank and the pump is substantially minimised in order to improve the efficiency of evacuating air from and thus filling the tank.

It will of course be realised that while the foregoing has been given by way of illustrative example of this invention, all such and other modifications and variations thereto as would be apparent to persons skilled in the art are deemed to fall within the broad scope and ambit of this invention as is herein set forth.

In addition, it should be appreciated that throughout the description and claims in this specification the word "comprise" and variations of that word such as "comprises" and "comprising", are not intended to exclude other additives, components, integers or steps.

## Claims

1. A transportable tank for collecting and disposing of fluid waste material able to be moved between a tank filling position and a tank emptying position on a transport vehicle;
the tank having an air evacuation connection specially adapted to connect directly and hermetically seal with a connection of a vacuum pump located on the transport vehicle in the tank filling position, such that connective dead space between the tank and the pump is substantially minimised.

2. A transportable and interchangeable tank for collecting and disposing of mud, slurry or other fluid waste material, produced by a water lance excavation vehicle, including in combination:
an enclosed hollow vessel for collecting the waste material,
the vessel adapted to be loaded on and unloaded from and transported on a transport vehicle;
the vessel including a waste inlet ,a waste outlet and an air evacuation connection;
the vessel able to be moved between a tank filling position and a tank emptying position on the transport vehicle;
the air evacuation connection specially adapted to connect directly to and hermetically seal with a complementarily configured connection of a vacuum pump on the transport vehicle in the tank filling position, such that connective dead space between the tank and the pump is substantially minimised in order to improve the efficiency of evacuating air from and thus filling the tank.

3. The tank of Claim 1 or Claim 2 wherein as air is evacuated from the tank by the vacuum pump, waste material is caused to flow into the tank via the waste inlet, and wherein when full, the tank is unloaded from the vehicle and replaced with an empty tank such that a substantially continuous collection of waste material is enabled by the use of a plurality of empty interchangeable replacement tanks.

4. The tank of any of the above claims which is transported on a specially adapted transport vehicle with tank loading and unloading means and tank moving means.

5. The tank of Claim 4 wherein the tank loading and unloading means comprises a hydraulically or pneumatically operated lifting crane mounted on the transport vehicle.

6. The tank of Claim 4 wherein the tank moving means comprises a hydraulically operated telescopic ram specially adapted to tilt the tank when it is directly supported by the chassis of the transport vehicle.

7. The tank of Claim 4 wherein, the tank is separately located on a tipping tray or bed of the transport vehicle.

8. The tank of any of the above claims wherein tank loading and unloading means, tank moving means and the vacuum pump are fixtures of the transport vehicle and whereby the air evacuation and vacuum pump connectors are caused to be joined when the tank is loaded on and moved into the tank filling position on the transport vehicle.

9. The tank of any of the above claims wherein the waste material collected is disposed of by transporting the filled tank to an approved waste disposal site wherein the tank is tilted into the tank emptying position on the transport vehicle and waste is pumped out through the waste outlet or a fully opening rear door.

10. A method of collecting and disposing of fluid waste material using the tank of any of the above claims including the steps of:
(a) evacuating air from the tank on the transport vehicle by the vacuum pump, wherein waste material is caused to flow into the tank via the waste inlet,
(b) unloading the tank from the vehicle when full and replacing the tank with an empty tank;
(c) repeating steps (a) and (b) such that a substantially continuous collection of waste material is enabled by utilising a plurality of interchangeable replacement tanks;
(d) transporting the filled tanks to a waste disposal site and emptying the tanks of their contents;
(e) reusing the emptied tanks as interchangeable replacement tanks for step (c).
